# EUROPEAN PATENT SPECIFICATION

(11) **EP 4 542 174 B1**
(45) Date of publication and mention of the grant of the patent: **01.07.2026**
(21) Application number: 23204392.7
(22) Date of filing: 18.10.2023
(51) Int. Cl.: G01C 21/34

(54) **METHOD FOR PROVIDING DATA FOR NAVIGATION OF AN ELECTRIC VEHICLE**
VERFAHREN ZUM BEREITSTELLEN VON DATEN ZUR NAVIGATION EINES ELEKTROFAHRZEUGS
PROCÉDÉ DE FOURNITURE DE DONNÉES POUR LA NAVIGATION D'UN VÉHICULE ÉLECTRIQUE

(43) Date of publication of application: 23.04.2025
(73) Proprietor: Volvo Car Corporation, 405 31 Göteborg (SE)
(72) Inventor: LARSSON, Viktor, 40531 Göteborg (SE); OHLSSON, Ellen, 40531 Göteborg (SE); NILSSON, Micaela, 40531 Göteborg (SE); RAJ, Avanish, 40531 Göteborg (SE); BOHMAN, Mats, 40531 Göteborg (SE)
(74) Representative: Kransell & Wennborg KB

(56) References cited:
- US-A1- 2017 030 728
- US-A1- 2017 370 738

## Description

### TECHNICAL FIELD

The present disclosure relates to a method for providing data for navigation of an electric vehicle, a computer program product, a data processing apparatus, and an electric vehicle comprising the data processing apparatus.

### BACKGROUND ART

Electric vehicles have shorter driving ranges compared to conventional internal combustion engines (ICE). It is also more time consuming to recharge an electric vehicle than to refuel an ICE vehicle, due to both, long recharge times and limited availability of fast chargers. These factors give rise to the so called "range anxiety" effect, where drivers are worried about getting stranded at an inconvenient location with a depleted battery. This can lead to overly cautious drivers of electric vehicles, who may charge the battery more frequently than necessary on long haul trips, or do not even attempt to go for longer trips with the electric vehicle.

Furthermore, increasing awareness of climate change and high and volatile electricity prizes has raised overall interest for energy consumption among many electric vehicle drivers, even for commuting trips where range anxiety is not really an issue. However, drivers without a technical interest may generally have a limited understanding of the factors that contribute to an increased energy consumption. Therefore, while range and consumption metrics may be provided by the vehicle to the driver, these are typically not helping with the range anxiety.

Furthermore, it is generally not very clear if economic functions provided by electric vehicle can reduce energy consumption sufficiently, to ensure that a desired destination can be reached without charging. Many drivers therefore may find it difficult, to use the provided metrics, to draw the right conclusions and make the right decision on whether to make a charging stop or not in order to arrive at the desired destination.
US 2017/370738 A1 describes an electric vehicle route guiding system including a location sensor that measures a current location of an electric vehicle; a roadmap storage having link information and node information for providing a running route; a route calculator that searches for a route having a smallest total value of a compensation link cost that is generated by adding a time link cost in consideration of a running time to an energy-based link cost on each link basis from a departure point to a destination as an optimal energy route; a display that displays information for route guide of the optimal energy route; and a controller that controls operations of the location sensor, the roadmap storage, the route calculator, and the display for the search and route guide through a navigation program.
US 2017/030728 A1 describes presenting energy-versus-distance measures for a planned driving route to a driver. The driver may provide input indicating a proposed change in one of their driver characteristics to present a different energy-versus-distance measure for the planned driving route. In particular, the driver may specify a "what-if scenario", such as for example, what if I drive 70 mph on this route segment instead of the 65 mph expected by the system. Based on such "what-if-scenario", the prediction of the energy-versus-distance measure is consequently recalculated / simulated.

### SUMMARY

The problem of poor decision making when deciding on making a charging stop or not to arrive at a desired destination, which is caused by the range anxiety in drivers of electric vehicles as described above, is at least partially solved, or alleviated by the subject matter of the independent claims of the present disclosure, wherein further examples are incorporated in the dependent claims.

According to a first aspect, there is provided a method, in particular for providing first data and second data indicative of or for navigation of an electric vehicle, the method comprising:
- obtaining a navigation destination and an indication of a state of charge of the electric vehicle,
- obtaining the first data indicative of a first route to the navigation destination based on the navigation destination and the indication of the state of charge, the first route including a charging stop for the electric vehicle,
- determining the second data indicative of a second route to the navigation destination based at least on the navigation destination and the indication of the state of charge, the second route excluding a charging stop for the electric vehicle, and the second data comprising one or more settings of the electric vehicle for limiting an energy consumption of the electric vehicle, and
- providing the first data and the second data for user input-based selection.

Accordingly, the method may solve the above problem in that it provides different routes for selection by a user, in particular driver, of the electric vehicle. While the first route includes a charging stop for the electric vehicle along the route to arrive at the navigation destination, the second route excludes a charging stop for the electric vehicle, thereby aiming at arriving at the navigation destination without charging the electric vehicle. Accordingly, the second route may potentially allow the driver to arrive faster at the navigation destination and without any circumstances involved in charging the electric vehicle, such as unavailable charging stations or high prices for electricity, in particular at charging stations located at highways and/or fast charging stations.

The first data and the second data may herein also be summarized as the data. The first data and the second data or, simply the data, may be for navigation of the electric vehicle. The first data and the second data being indicative of the navigation may mean that it may at least partially indicate the navigation of the electric vehicle in terms of the route indicated by the respective data. In particular, the first data and the second data may be (suitable) for navigation of the electric vehicle. Accordingly, the first data and second data comprising the respective routes may be used for navigation of the electric vehicle.

The first route and second route may be the same except for the charging stop or may differ from one another in more than the charging stop, e.g., use one or more different roads or, in other words, a different road profile along the route. For example, the first route may be a longer route, e.g., using more highway route than the second route, while the second route may be a shorter route, e.g., using less highway route than the first route, or vice versa such that the second data may not only be more economic in terms of the limited energy consumption of the electric vehicle by virtue of the one or more settings but also based on a different road profile.

To exclude the charging stop on the second route, the second data indicative of the second route comprises the one or more settings of the electric vehicle for limiting the energy consumption of the electric vehicle. Accordingly, the travel with the electric vehicle based on the second data or, in other words, along the second route, may be limited in terms of driving comfort or options, as is explained in more detail below.

To provide the first data and second data for user input-based selection, the method may further comprise:
- providing data prompting the user of the electric vehicle to provide user input indicative of the selection of the first data or the second data, and
- obtaining data indicative of the selected first data or second data based on the user input.

The first data and second data being respectively indicative of the first route and the second route may be provided to or on the electric vehicle itself or any separate device, that may be communicatively couplable with the electric vehicle. Specifically, the data prompting the user may be provided to the electric vehicle or the separate device and, similarly, the data indicative of the first route or second route based on the user input may be obtained therefrom. For example, the electric vehicle may comprise a user control interface for receiving the user input for the user input-based selection of the first data or second data and thereby the choice of the first route or the second route. For example, the user control interface may be a display, e.g., a touch display, where the user input may be received by touch. However, other forms of user control interfaces, such as physical buttons, keys or rotary controls, or voice control interfaces with voice commands as user input may also be used to provide the first data and the second data for user input-based selection. The separate device may be a smartphone, tablet computer or any other form of computing device, on which the first data and the second data may be provided, and which may receive a user input for the user input-based selection. The first data and second data may be represented with their routes on a map, e.g., displayed on the display of the electric vehicle or the separate device, an indication of an estimate of the state of charge at the navigation destination and/or the one or more settings of the electric vehicle, for example. With the representation of this information, the user may make an informed decision for any of the routes to be selected.

The indication of the state of charge of the electric vehicle may be an indication of a current state of charge of the electric vehicle. Besides the navigation destination and the indication of the state of charge of the electric vehicle, map data may be obtained. The map data may comprise road information, e.g., including a location of city roads, highways, etc., speed limitation information for the roads, infrastructure information, e.g., the location of traffic lights, and/or traffic information, including information on accidents and/or traffic jams, for example. The first data and/or the second data may further be based on the map data. Further, the obtaining of the first data may alternatively be a determination of the first data. Accordingly, instead of the method obtaining the first data, which may accordingly be determined by another method, e.g., on another computer, it may be determined by the method of the first aspect.

The electric vehicle may be a battery electric vehicle. It may comprise at least one battery and at least one electric motor connected to the battery for receiving power therefrom and for driving the electric vehicle. The electric vehicle may comprise partial autonomic driving capabilities, e.g., lane-keeping assistant and cruise control, or full autonomic driving capabilities, with which the electric vehicle is capable to arrive at the navigation destination without requiring controlling of the electric vehicle by a driver.

The method may be at least partly computer-implemented, which means that one, multiple or all of the steps of the method may be carried out by a computer. The method may further be implemented in software or in hardware, or in software and hardware. Further, the method may be carried out by computer program instructions running on means that provide data processing functions. The data processing means may be a suitable computing means, such as an electronic control module, which may also be a distributed computer system. The data processing means or the computer, respectively, may comprise one or more of a processor, a memory, a data interface, etc.

In an example, the one or more settings may comprise at least one from a driving speed limitation for limiting a driving speed of the electric vehicle, a power delivery limitation for limiting a power delivery to an electric drive component of the electric vehicle, and a climate control limitation for limiting at least one climate control setting of a climate control system of the electric vehicle. Accordingly, the one or more settings may comprise limitation in different directions of functions of the electric vehicle, namely driving speed, power delivery to an electric drive component and climate control setting. In each case, this may be limiting the driving comfort of the passengers of the electric vehicle. The limitation of the driving speed may be a reduced driving speed compared to an unrestricted or greater driving speed in the first data. The limitation of the power deliver limitation may not be applied in the first data or be less limiting than in the second data, e.g., in terms of a magnitude of limited power delivery. And the climate control limitation may be not applied in the first data or be less limiting than in the third data, e.g., in terms of a magnitude of the limitation and/or a number of climate control settings that are limited.

In another example, the one or more settings may comprise at least two from a driving speed limitation for limiting a driving speed of the electric vehicle, a power delivery limitation for limiting a power delivery to an electric drive component of the electric vehicle, and a climate control limitation for limiting at least one climate control setting of a climate control system of the electric vehicle. The combination of at least two, or all three, of the aforesaid advantageously allows for excluding charging stops more often and with greater certainty such that the driver of the electric vehicle may more often selected the second data with his user input and thereby make trips without charging stops.

In one example, one of the settings may comprise the power delivery limitation, and the electric drive component with limited power delivery may be one electric motor of at least two electric motors of the electric vehicle. Accordingly, the energy consumption of the electric vehicle may be limited or, in other words, reduced, in particular over the energy consumption of the electric vehicle based on the first data, by operating one of the at least two electric motors only with limited power, which may include that no power is provided to the electric motor or only power such that it may be kept in an idling state for fast operation, if necessary. Specifically, two or more electric motors in electric vehicles may be used to provide certain functions, such as four-wheel drive or increased acceleration. Such functions may not be required and thus deactivated for aiding in arriving at the navigation destination without a charging stop. The deactivation of these functions by means of the power delivery limitation may only be for certain times or when not needed. Accordingly, e.g., on iced roads or when overtaking, the power delivery limitation may be lifted as long as required to ensure safe driving of the electric vehicle. Alternatively, or additionally to the electric motor, the electric drive component with limited power delivery may be a gear component, a torque vectoring component, an engine sound simulator, or similar.

In an example, the power delivery limitation may be configured to disable power delivery to the electric motor. Accordingly, the electric motor may be disabled or, in other words, not be in operation, such that it does not consume energy and the energy consumption of the electric vehicle is greatly reduced, in particular by having only one electric motor drive the electric vehicle.

In an example, the method may further comprise:
- predicting a first predicted indication of the state of charge of the electric vehicle at the navigation destination based on the first data and excluding charging at the charging stop,
- predicting a second predicted indication of the state of charge of the electric vehicle at the navigation destination based on the second data,
wherein the one or more settings for the second data are determined such that the second predicted indication of the state of charge is greater than the first predicted indication of the state of charge. This may be particularly beneficial if the first route and the second route are substantially the same or, in other words, use the same road profile except for the charging stop. Thereby, the range anxiety of the user, e.g., driver, of the electric vehicle may be reduced and he may be motivated to select the second data, preventing an unnecessary charging stop, seeing that he may have more state of charge or driving range left with the second data compared to the first data excluding any state of charge that may be gained by charging at the charging stop.

In an example, the method may further comprise obtaining a selection of the one or more settings based on user input. For this purpose, the method may further comprise the steps of:
- providing data prompting the user of the electric vehicle to provide user input indicative of the selection of the one or more settings, and
- obtaining data indicative of the selected one or more settings based on the user input.
Thereby, besides providing the user with the possibility of the selection of one of the first data and the second data, the user may also be provided with the possibility to select the one or more settings, which allows him to customize the second data, in particular the comfort settings for his driving along the second route. Accordingly, the user may customize the one or more settings according to his preferences.

In an example, the obtained selection comprises a selection of at least one settings value from a settings value range of the one or more settings. For example, the one or more settings may be provided not merely for selection as such, e.g., limit driving speed or not, but also for selecting settings values within the one or more settings, e.g., select a settings value indicative of a limited driving speed. Further, the user may not be provided for selection within a full range of applicable settings values but with a limited range according to the settings value. The settings value range may be predefined and/or be based on, in particular defined by, the navigation destination and the indication of the state of charge, on which the second data is based and which, optionally, may be included in the second data. For example, the settings value range may be predefined such that the navigation destination, based on the determination of the second data, may be reached without a charging stop. Accordingly, it may be ensured that the navigation destination will be reached based on the second data while giving flexibility to the user such that they may control the one or more settings of the electric vehicle within certain boundaries of the settings value range. For this purpose, data prompted to the user of the electric vehicle to provide the user input may be comprising only the settings value range of the one or more settings. Accordingly, in the example of the display as user interface for user selection, the user may be only shown the settings value range of the one or more settings, from which they may select one or more settings values.

In an example, the user input-based selection of one setting of the one or more settings adjusts at least another setting of the one or more settings such that it is determined that the navigation destination may be reached without a charging stop based on the user input-based selection and the adjustment of settings. The adjustment may be automatic. Accordingly, the user does not have to worry about his selection, potentially creating or increasing the range anxiety, e.g., by reducing an indication of an estimate of the state of the charge of the electric vehicle at the navigation destination, which may be displayed to the user, but instead another setting is adjusted such that he may select the second data without hesitation. For example, when the user selects a driving speed limitation to be 100 km/h within a settings value range of 80 km/h to 100 km/h, because he wants to arrive as quick as possible, in turn an adjustment of the at least another setting may be that the climate control system is turned off. Alternatively, the adjustment of the at least another setting may be that in a cold environment, the maximum cabin temperature is set to a low temperature, e.g., 18 °C. Alternatively, or additionally, an adjustment of the at least another setting may be that one of two electric motors of the electric vehicle is disabled.

In an example, the method may further comprise:
- obtaining a user input-based selection of the second data, and
- providing vehicle control data configured for controlling the electric vehicle based on the one or more settings of the selected second data.
The vehicle control data may be provided to the computer or control unit carrying out the method of the first aspect or to another computer or control unit for controlling the electric vehicle based on the one or more settings of the selected second data. For example, the vehicle control data may be provided for cruise control of the vehicle, in particular to a control unit or computer for cruise control, which may be different from or the same as the one carrying out the method of the first aspect. Accordingly, the driving speed may be controlled by cruise control according to a driving speed limitation of the one or more settings, for example. In particular, the cruise control may set the driving speed according to the driving speed limitation. Similarly, the vehicle control data may be provided for power delivery limitation and/or climate control limitation, in particular to a control unit or computer thereof, which may be different from or the same as the one carrying out the method of the first aspect.

In an example, the method may further comprise:
- obtaining a user input-based selection of the second data,
- providing an updated indication of the state of charge of the electric vehicle during navigation of the electric vehicle, based on the selected second data, and
- determining whether the navigation destination may be reached without a charging stop based at least on the updated indication of the state of charge.
Such updated indication may be provided constantly or at time intervals, which may be predefined, in order to determine whether the navigation destination may be reached without a charging stop based at least on the updated indication of the state of charge. Thereby, it may be assured that the electric vehicle will reach the navigation destination without the charging stop.

In an example, the method may further comprise switching from the selected second data to the first data or new data for navigating the electric vehicle when it is determined that the navigation destination may not be reached without a charging stop based at least on the updated indication of the state of charge. Of course, whether the navigation destination may not be reached without a charging stop based at least on the updated indication of the state of charge may include consideration of a safety threshold, e.g., of 10, 20 or more kilometres of remaining range of the electric vehicle at the navigation destination, such that the navigation destination is deemed to be not reached if the electric vehicle would be within the safety threshold at the navigation destination. Thereby, the risk of an undesired stop of the charging vehicle with depleted battery and without a charging station nearby may be avoided. The new data may be determined in a separate step. The new data may be indicative of a new or third route to the navigation destination based on the navigation destination and the indication of the state of charge or an updated indication of the state of charge, the first route including a charging stop for the electric vehicle. Switching to new data may be advantageous if the charging stop is already passed at the time that the data shall be switched or when the first route and second route have different road profiles as described herein below.

In an example, the method may further comprise updating the one or more settings based on the updated indication of the state of charge of the electric vehicle. Accordingly, e.g., as an alternative to the switching from the selected second data to the first data, the one or more settings may be updated in order to still reach the navigation destination without a charging stop. Updating may mean that the one or more settings are amended. In particular, the one or more settings may be updated or amended such that the energy consumption of the electric vehicle is further limited over the previous one or more settings, e.g., by further limiting or, in other words, reducing the driving speed, and/or turning off the climate control system of the electric vehicle. Such updating of the one or more settings may be automatic or based on a prompt provided to the user. The prompt may require the user to select or accept the updated one or more settings before the one or more settings are updated. Similarly, if possible, it may allow user input-based selection of one or more settings value. The prompt may include the alternative of switching to the first data for selection by the user as an alternative to the updated one or more settings.

According to a second aspect, there is provided a computer program product comprising instructions which, when the program is executed by a computer, cause the computer to carry out the method of the first aspect. The computer program product may be a computer program as such or a product, e.g., a computer readable medium, having stored the computer program thereon.

According to a third aspect, there is provided a data processing apparatus comprising means for carrying out the method of the first aspect. The means may be a computer, e.g., include a processor and a computer readable medium, particularly the one described above with respect to the computer program product of the second aspect.

The data processing apparatus and/or the computer program product may comprise modules for each one of the steps of the method as described herein. For example, there may be a first obtaining module for obtaining the navigation destination and indication of the state of charge of the electric vehicle. The first obtaining module or a second module may be for obtaining the first data. A determining module may be for determining the second data. A providing module may be for providing the first data and the second data for the user input-based selection. The modules may be implemented in hardware and/or software.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a vehicle according to an aspect of this disclosure and a separate device;
- Figure 2: shows a schematic illustration of a display of a user control interface of the vehicle or the separate device displaying information according to a first example;
- Figure 3: shows a schematic illustration of the display of Fig. 2 displaying information according to a second example;
- Figure 4: shows a schematic illustration of the display of Fig. 2 displaying information according to a third example;
- Figure 5: shows a schematic illustration of the display of Fig. 2 displaying information according to a fourth example; and
- Figure 6: shows a schematic illustration of a method according to an aspect of this disclosure.

### DETAILED DESCRIPTION

The Figures are merely schematic representations and serve only to illustrate examples of the disclosure. Identical or equivalent elements are in principle provided with the same reference signs.

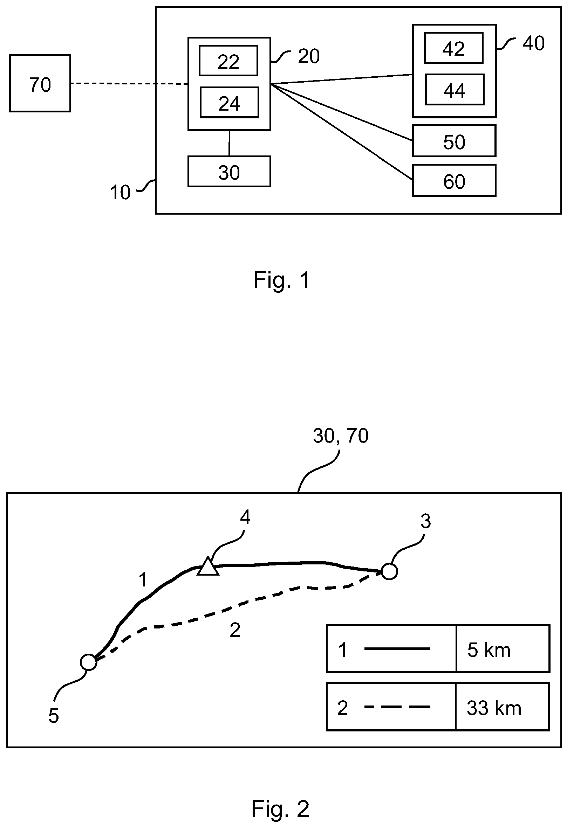

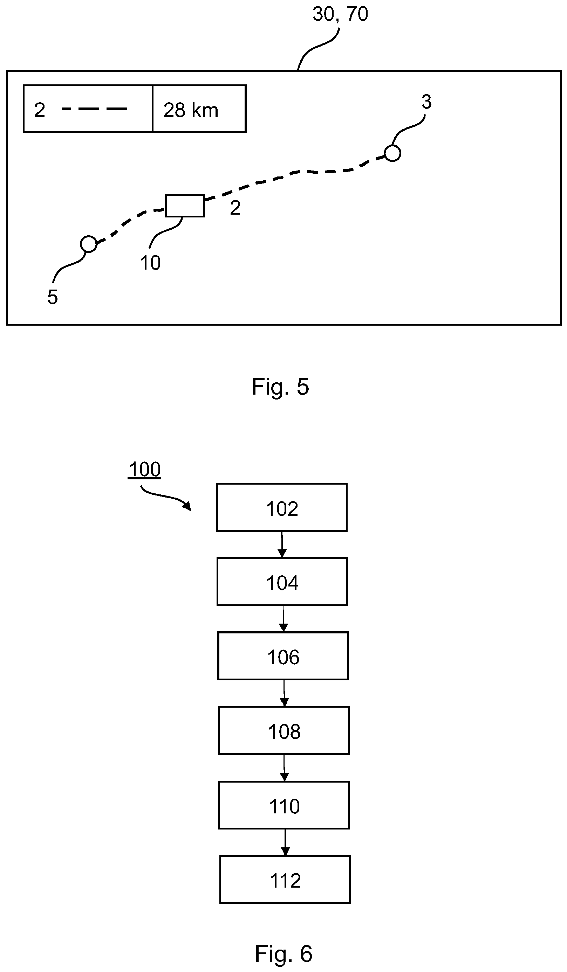

Figure 1 shows a schematic illustration of an electric vehicle 10. The electric vehicle 10 comprises a data processing apparatus 20, which comprises a processor 22 and a computer program product 24, which may be a computer program as such or a computer-readable storage medium, on which a computer program may be stored. When the data processing apparatus 20 executes the computer program of the computer program product 24 by virtue of its processor 22, the method 100 as schematically illustrated in Fig. 6 may be carried out.

The electric vehicle 10 further comprises a user control interface 30, which may be coupled to the data processing apparatus 20 as shown in Fig. 1. Further, there may be a separate device 70, which may be any electronic device such as but not limited to a smartphone, tablet computer or any other type of computer. The separate device 70 may be configured to establish a wireless data communication with the data processing apparatus 20 as indicated by the dashed line connecting the data processing apparatus 20 with the separate device 70. For this purpose, both, the vehicle 10 and the separate device 70, may comprise respective communication systems, e.g., comprising an antenna, which may be based on any wireless communication standard, for example. Both, the user control interface 30 and the separate device 70 may comprise any type of input means for making a user input-based selection as described further below. Such input means may be but are not limited to a touch display, for example, as shown in the Figs. 2 to 5 as representation of the user control interface 30 and the separate device 70.

The electric vehicle 10 of this example further comprises an electric drive system 40. The electric drive system 40 may comprise electric drive components 42, 44, two of which are shown herein exemplary. For example, the electric drive component 42 may be a first electric motor and the electric drive component 44 may be a second electric motor of the electric vehicle 10. It may be possible to limit the power delivery to at least one of the electric drive components 42, 44, in particular to disable one of these. For this purpose, the data processing apparatus 20 may be connected, e.g., directly or via one or more computers or control units, to the electric drive system 40 as shown in Fig. 1.

Further, the electric vehicle 10 may comprise a speed limitation system 50 for limiting the driving speed of the electric vehicle 10. Such speed limitation system 50 may be formed by or include a cruise control system of the electric vehicle 10, for example. The speed limitation system 50 may be a software-implemented function for execution by corresponding hardware and/or hardware implemented. The speed limitation system 50 is shown herein separate from the data processing apparatus 20 but may alternatively be comprised by the data processing apparatus 20, which may be forming a central computing unit of the electric vehicle 10 providing more functions than explained herein with reference to the method 100. Thereby, the data processing apparatus 20 may further limit the driving speed of the electric vehicle 10.

Moreover, the electric vehicle 10 may comprise a climate control system 60 as shown in Fig. 1. This climate control system 60 may in particular be configured for regulating, e.g., by heating or cooling, the climate in a passenger cabin of the electric vehicle 10. The data processing apparatus 20 is also connected to the climate control system 60 and can thereby limit at least one climate control setting, e.g., a minimum temperature setting, a maximum temperature setting and/or a blower level of the climate control system.

Figure 2 shows a display of the user control interface 30 or the separate device 70 displaying information according to a first example. This information is based on the method 100 as herein explained with reference to Fig. 6.

In a step 102 of method 100, a navigation destination 3 and an indication of a state of charge (SOC) of the electric vehicle 10 are obtained by the data processing apparatus 20. The navigation destination 3 may be based on a user input on the display of Fig. 2 or any other user control interface 30 of the electric vehicle 10, for example. The indication of the state of charge, e.g., as percentage of a current charge compared to a capacity of a battery (not shown) of the electric vehicle 10, may be determined by the data processing apparatus 20 or any control unit, e.g., battery control unit, of the battery, and consequently be obtained therefrom. The SOC may be accordingly a current SOC.

Then, in a step 104 of method 100, first data is obtained by the data processing apparatus 20. The first data is indicative of a first route 1 to the navigation destination 3 based on the obtained navigation destination 3 and the obtained indication of the state of charge. The first route 1 includes a charging stop 4 at a charging station along the first route 1 for the electric vehicle 10.

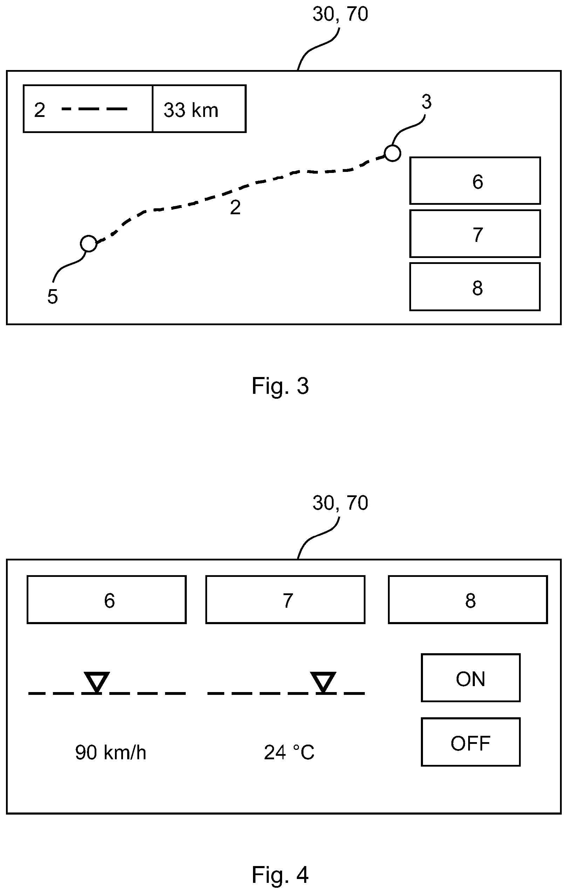

Before, after and/or at least partially in parallel to step 104, in a step 106 of method 100, second data is obtained by the data processing apparatus 20. The second data is indicative of a second route 2 to the navigation destination 3 based at least on the obtained navigation destination and the obtained indication of the state of charge. The second route 2 excludes the charging stop 4, in particular any charging stop, for the electric vehicle 10, and the second data comprises one or more settings 6, 7, 8 (see Figs. 3 and 4) of the electric vehicle 10 for limiting an energy consumption of the electric vehicle 10.

Then, in a step 108 of method 100, the first data and the second data for user input-based selection by the data processing apparatus 20. This is illustrated in the example of Fig. 2, where as an example at least parts of the first data and second data are illustrated, namely the first route 1, the second route 2, the navigation destination 3 and the charging stop 4. Further, a current location 5 of the electric vehicle 10 is illustrated therein. Additionally, for each one of the first data and second data, by referring to the first route 1 and the second route 2, an exemplary estimated or predicted indication of SOC at the navigation destination 3 is displayed. Note that for the first route 1 or, in other words, the first data, the estimated indication of SOC excludes any charging at the charging stop 4. The predicted indication of the SOC of the electric vehicle 10 at the navigation destination 3 based on the second data, herein also referred to as second predicted indication and exemplary shown to be 33 km, may be determined, by determining the one or more settings for limiting the energy consumption of the electric vehicle 10, such that the second predicted indication is greater than a first predicted indication of the SOC of the electric vehicle 10 at the navigation destination 3 based on the first data and excluding charging at the charging stop or, in other words, the charging stop, shown herein exemplary with 5 km. Note that any indication given herein is merely exemplary and may be given in any other unit or depiction, e.g., in miles, as colours indicative of the range of the electric vehicle, as a number of dots or lines indicative of the range of the electric vehicle, as a percentage of the SOC, etc. Also, the indications given herein are merely exemplary and there may be more, e.g., an estimated arrival time at the navigation destination, or less, which may depend on user settings and/or initial settings in the computer program of the data processing apparatus 20.

In this example, the first route 1 and the second route 2 have different road profiles, i.e., use different roads, which may also be determined such that the energy consumption of the electric vehicle 10 via the second route 2 is limited or lower compared to the first route 1, e.g., by having a shorter second route 2 compared to the first route 1. However, this is not necessary and except for the charging stop 4, the first route 1 and the second route 2 may be identical at least in part or substantially in full.

Then, in a fifth step 110 of method 100, the data processing apparatus 20 may obtain a user input-based selection of the second data, if they want to avoid the charging stop 4. In the example of Fig. 2, this may be done by touching the field comprising the indication of the second data by exemplary showing the number 2, the dashed line, and the 33 km of predicted range at the navigation destination. Of course, any other user input except for touching a field on a touch display, e.g., via voice command or physical buttons, may be alternatively provided by the user and obtained by the data processing apparatus 20.

Then, in a sixth step 112 of method 100, the data processing apparatus 20 provides vehicle control data configured for controlling the electric vehicle 10 based on the one or more settings 6, 7, 8 of the selected second data. The data processing apparatus 20 may provide such vehicle control data depending on the one or more settings to any one of the previously explained electric drive system 40, speed limitation system 50 and/or climate control system 60 or, alternatively, process the vehicle control data itself to correspondingly provide the one or more settings 6, 7, 8 on any one of the aforementioned systems 40, 50, 60.

In the example of Fig. 3, showing an example of the information displayed on the display of the separate device 70 or the user control interface 30, after the selection of the second data, the different settings 6, 7, 8 are shown. The different settings 6, 7, 8 may be made selectable by user input. This means that the user may select any one of the different settings 6, 7, 8 and the user input-based selection of the one or more settings may be obtained in a further step (not shown) of the method 100 by the data processing apparatus 20.

A more detailed example of Fig. 3 is shown in Fig. 4, where the user may select different settings values associated with the different settings 6, 7, 8. For example, the setting 6 may be a driving speed limitation for limiting the driving speed of the electric vehicle 10 by the speed limitation system 50. As shown, the user may select the driving speed limitation, in this example set to 90 km/h. Specifically, the user may select, particularly adjust, the driving speed limitation within a settings value range as exemplary depicted in form of a dashed line, where the user may, by moving the exemplary triangularly shaped selector, adjust the driving speed limitation within the settings value range.

Similarly, in Fig. 4, the user may select the setting 7 as climate control limitation for limiting at least one climate control setting of the climate control system 60. In this example, the climate control setting is a temperature setting, particularly a minimum temperature setting, but may be alternative any other climate control setting such as a maximum temperature setting or a blower level, which may be determined by a fan speed of a fan of the climate control system 60. In this example, at hot ambient temperatures, the minimum temperature setting is limited to 24 °C of cabin temperature such that the cabin may not be cooled down below this temperature in order to limit the energy consumption of the electric vehicle 10 along the second route.

Further, Fig. 4 shows how as setting 8 a power delivery limitation for limiting a power delivery to one of the electric drive components 42, 44 may be selected by the user. In this case, one of the two electric motors may be disabled as indicated by the OFF field, which may be touchable for disabling the electric motor and thereby limiting the energy consumption of the electric vehicle 10.

It may be provided that when the user selects one of the settings, in particular within the settings value range, that another one of the settings is adjusted. For example, if the user desires to have a cooler cabin than 24 °C and adjusts the setting 7 by decreasing the temperature to 22 °C, the driving speed limitation of setting 6 may be adjusted to a driving speed limitation, e.g., from 90 km/h to 87 km/h or any lower driving speed, such that the navigation destination 3 may still be reached without charging stop based on the second data.

Fig. 5 shows that, while the electric vehicle 10 travels along the second route 2, the indication of the SOC of the electric vehicle 10 at the navigation destination 3 may be updated, e.g., here from 33 km in Figs. 2 and 3 to 28 km in Fig. 5 based on the selected second data. When the navigation destination 3 is deemed to be unreachable without a charging stop, the data processing apparatus 20 may switch to the first data or first route 1 or determine new data indicative of a new route with a charging stop, in case the charging stop 4 from the first data has already been passed or another charging stop is preferred or the first route 1 and the second route 2 have different road profiles as shown in Figs. 2 to 5. Alternatively, or additionally, the one or more settings 6, 7, 8 may be updated based on the updated indication of SOC of the electric vehicle 10. These and any of the further steps with respect to the method 100 mentioned herein and not explicitly shown in Fig. 6 may be carried out by the data processing apparatus 20.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: first route
- 2: second route
- 3: navigation destination
- 4: charging stop
- 5: current location
- 6, 7, 8: settings
- 10: electric vehicle
- 20: data processing apparatus
- 22: processor
- 24: computer program product
- 30: user control interface
- 40: electric drive system
- 42, 44: electric drive components
- 50: speed limitation system
- 60: climate comfort system
- 70: separate device
- 100: method
- 102-112: steps

## Claims

1. A method (100) for providing first data and second data indicative of navigation of an electric vehicle (100), the method (100) comprising:
- obtaining a navigation destination (3) and an indication of a state of charge of the electric vehicle (20),
- obtaining the first data indicative of a first route (1) to the navigation destination (3) based on the navigation destination (3) and the indication of the state of charge, the first route including a charging stop (4) for the electric vehicle (10),
- determining the second data indicative of a second route (2) to the navigation destination (3) based at least on the navigation destination (3) and the indication of the state of charge, the second route (2) excluding a charging stop for the electric vehicle (10), and the second data comprising one or more settings (6, 7, 8) of the electric vehicle (10) for limiting an energy consumption of the electric vehicle (10), and
- providing the first data and the second data for user input-based selection.

2. The method (100) of claim 1, wherein the one or more settings (6, 7, 8) comprise at least two from a driving speed limitation for limiting a driving speed of the electric vehicle (10), a power delivery limitation for limiting a power delivery to an electric drive component (42, 44) of the electric vehicle (10), and a climate control limitation for limiting at least one climate control setting of a climate control system (60) of the electric vehicle (10).

3. The method (100) of claim 2, wherein one of the settings (6, 7, 8) comprises the power delivery limitation, and wherein the electric drive component (42, 44) with limited power delivery is one electric motor of at least two electric motors of the electric vehicle (10).

4. The method (100) of claim 3, wherein the power delivery limitation is configured to disable power delivery to the electric motor.

5. The method (100) of any one of the previous claims, wherein the method (100) further comprises:
- predicting a first predicted indication of the state of charge of the electric vehicle (10) at the navigation destination (3) based on the first data and excluding charging at the charging stop (4), and
- predicting a second predicted indication of the state of charge of the electric vehicle (10) at the navigation destination (3) based on the second data,
wherein the one or more settings (6, 7, 8) for the second data are determined such that the second predicted indication of the state of charge is greater than the first predicted indication of the state of charge.

6. The method (100) of any one of the previous claims, wherein the method (100) further comprises obtaining a selection of the one or more settings (6, 7, 8) based on user input.

7. The method (100) of claim 6, wherein the obtained selection comprises a selection of at least one settings value from a settings value range of the one or more settings (6, 7, 8).

8. The method (100) of claim 6 or 7, wherein the user input-based selection of one setting (6, 7, 8) of the one or more settings (6, 7, 8) adjusts at least another setting (6, 7, 8) of the one or more settings (6, 7, 8) such that it is determined that the navigation destination (3) may be reached without a charging stop based on the user input-based selection and the adjustment of settings (6, 7, 8).

9. The method (100) of any one of the previous claims, wherein the method (100) further comprises:
- obtaining a user input-based selection of the second data, and
- providing vehicle control data configured for controlling the electric vehicle (10) based on the one or more settings (6, 7, 8) of the selected second data.

10. The method (100) of any one of the previous claims, wherein the method (100) further comprises:
- obtaining a user input-based selection of the second data,
- providing an updated indication of the state of charge of the electric vehicle (10) during navigation of the electric vehicle (10), based on the selected second data, and
- determining whether the navigation destination (3) may be reached without a charging stop based at least on the updated indication of the state of charge.

11. The method (100) of claim 10, wherein the method (100) further comprises switching from the selected second data to the first data or new data for navigating the electric vehicle (10) when it is determined that the navigation destination (3) may not be reached without a charging stop based at least on the updated indication of the state of charge.

12. The method (100) of claim 10 or 11, wherein the method (100) further comprises updating the one or more settings (6, 7, 8) based on the updated indication of the state of charge of the electric vehicle (10).

13. Computer program product (24) comprising instructions which, when the program is executed by a computer, cause the computer to carry out the method (100) of any one of the previous claims.

14. A data processing apparatus (20) comprising means for carrying out the method (100) of any one of claims 1 to 12.

15. An electric vehicle (10) comprising the data processing apparatus (20) of claim 14.

## Patentansprüche

1. Verfahren (100) zum Bereitstellen erster Daten und zweiter Daten, die eine Navigation eines Elektrofahrzeugs (100) angeben, wobei das Verfahren (100) umfasst:
- Erhalten eines Navigationsziels (3) und einer Angabe eines Ladezustands des Elektrofahrzeugs (20),
- Erhalten der ersten Daten, die eine erste Route (1) zu dem Navigationsziel (3) basierend auf dem Navigationsziel (3) und der Angabe des Ladezustands angeben, wobei die erste Route einen Ladestopp (4) für das Elektrofahrzeug (10) einschließt,
- Bestimmen der zweiten Daten, die eine zweite Route (2) zu dem Navigationsziel (3) basierend mindestens auf dem Navigationsziel (3) und der Angabe des Ladezustands angeben, wobei die zweite Route (2) einen Ladestopp für das Elektrofahrzeug (10) ausschließt und die zweiten Daten eine oder mehrere Einstellung(en) (6, 7, 8) des Elektrofahrzeugs (10) zum Begrenzen eines Energieverbrauchs des Elektrofahrzeugs (10) umfassen, und
- Bereitstellen der ersten Daten und der zweiten Daten für eine benutzereingabebasierte Auswahl.

2. Verfahren (100) nach Anspruch 1, wobei die eine oder die mehreren Einstellung(en) (6, 7, 8) mindestens zwei von einer Fahrgeschwindigkeitsbegrenzung zum Begrenzen einer Fahrgeschwindigkeit des Elektrofahrzeugs (10), einer Leistungsabgabebegrenzung zum Begrenzen einer Leistungsabgabe an eine Elektroantriebskomponente (42, 44) des Elektrofahrzeugs (10) und einer Klimaregelungsbegrenzung zum Begrenzen mindestens einer Klimaregelungseinstellung eines Klimaregelungssystems (60) des Elektrofahrzeugs (10) umfasst/umfassen.

3. Verfahren (100) nach Anspruch 2, wobei eine der Einstellungen (6, 7, 8) die Leistungsabgabebegrenzung umfasst und wobei die Elektroantriebskomponente (42, 44) mit begrenzter Leistungsabgabe ein Elektromotor von mindestens zwei Elektromotoren des Elektrofahrzeugs (10) ist.

4. Verfahren (100) nach Anspruch 3, wobei die Leistungsabgabebegrenzung dazu ausgelegt ist, die Leistungsabgabe an den Elektromotor zu deaktivieren.

5. Verfahren (100) nach einem der vorhergehenden Ansprüche, wobei das Verfahren (100) ferner umfasst:
- Vorhersagen einer ersten vorhergesagten Angabe des Ladezustands des Elektrofahrzeugs (10) an dem Navigationsziel (3) basierend auf den ersten Daten und Ausschließen des Ladens an dem Ladestopp (4) und
- Vorhersagen einer zweiten vorhergesagten Angabe des Ladezustands des Elektrofahrzeugs (10) an dem Navigationsziel (3) basierend auf den zweiten Daten,
wobei die eine oder die mehreren Einstellung(en) (6, 7, 8) für die zweiten Daten so bestimmt wird/werden, dass die zweite vorhergesagte Angabe des Ladezustands größer als die erste vorhergesagte Angabe des Ladezustands ist.

6. Verfahren (100) nach einem der vorhergehenden Ansprüche, wobei das Verfahren (100) ferner ein Erhalten einer Auswahl der einen oder der mehreren Einstellung(en) (6, 7, 8) basierend auf einer Benutzereingabe umfasst.

7. Verfahren (100) nach Anspruch 6, wobei die erhaltene Auswahl eine Auswahl von mindestens einem Einstellungswert aus einem Einstellungswertbereich der einen oder der mehreren Einstellung(en) (6, 7, 8) umfasst.

8. Verfahren (100) nach Anspruch 6 oder 7, wobei die benutzereingabebasierte Auswahl einer Einstellung (6, 7, 8) der einen oder der mehreren Einstellung(en) (6, 7, 8) mindestens eine andere Einstellung (6, 7, 8) der einen oder der mehreren Einstellung(en) (6, 7, 8) so anpasst, dass basierend auf der benutzereingabebasierten Auswahl und der Anpassung von Einstellungen (6, 7, 8) bestimmt wird, dass das Navigationsziel (3) ohne einen Ladestopp erreicht werden kann.

9. Verfahren (100) nach einem der vorhergehenden Ansprüche, wobei das Verfahren (100) ferner umfasst:
- Erhalten einer benutzereingabebasierten Auswahl der zweiten Daten und
- Bereitstellen von Fahrzeugsteuerdaten, die zum Steuern des Elektrofahrzeugs (10) basierend auf der einen oder den mehreren Einstellung(en) (6, 7, 8) der ausgewählten zweiten Daten ausgelegt sind.

10. Verfahren (100) nach einem der vorhergehenden Ansprüche, wobei das Verfahren (100) ferner umfasst:
- Erhalten einer benutzereingabebasierten Auswahl der zweiten Daten,
- Bereitstellen einer aktualisierten Angabe des Ladezustands des Elektrofahrzeugs (10) während der Navigation des Elektrofahrzeugs (10) basierend auf den ausgewählten zweiten Daten und
- Bestimmen, basierend mindestens auf der aktualisierten Angabe des Ladezustands, ob das Navigationsziel (3) ohne einen Ladestopp erreicht werden kann.

11. Verfahren (100) nach Anspruch 10, wobei das Verfahren (100) ferner ein Umschalten von den ausgewählten zweiten Daten zu den ersten Daten oder neuen Daten zum Navigieren des Elektrofahrzeugs (10) umfasst, wenn basierend mindestens auf der aktualisierten Angabe des Ladezustands bestimmt wird, dass das Navigationsziel (3) nicht ohne einen Ladestopp erreicht werden kann.

12. Verfahren (100) nach Anspruch 10 oder 11, wobei das Verfahren (100) ferner ein Aktualisieren der einen oder der mehreren Einstellung(en) (6, 7, 8) basierend auf der aktualisierten Angabe des Ladezustands des Elektrofahrzeugs (10) umfasst.

13. Computerprogrammprodukt (24), das Anweisungen umfasst, die, wenn das Programm durch einen Computer ausgeführt wird, den Computer veranlassen, das Verfahren (100) nach einem der vorhergehenden Ansprüche auszuführen.

14. Datenverarbeitungseinrichtung (20), die Mittel zum Ausführen des Verfahrens (100) nach einem der Ansprüche 1 bis 12 umfasst.

15. Elektrofahrzeug (10), das die Datenverarbeitungseinrichtung (20) nach Anspruch 14 umfasst.

## Revendications

1. Procédé (100) de fourniture de premières données et de deuxièmes données indiquant une navigation d'un véhicule électrique (100), le procédé (100) comprenant :
- l'obtention d'une destination de navigation (3) et d'une indication d'un état de charge du véhicule électrique (20),
- l'obtention des premières données indiquant un premier itinéraire (1) vers la destination de navigation (3) sur la base de la destination de navigation (3) et de l'indication de l'état de charge, le premier itinéraire comportant un arrêt de recharge (4) pour le véhicule électrique (10),
- la détermination des deuxièmes données indiquant un deuxième itinéraire (2) vers la destination de navigation (3) sur la base au moins de la destination de navigation (3) et de l'indication de l'état de charge, le deuxième itinéraire (2) excluant un arrêt de recharge pour le véhicule électrique (10), et les deuxièmes données comprenant un ou plusieurs réglages (6, 7, 8) du véhicule électrique (10) destinés à limiter une consommation d'énergie du véhicule électrique (10), et
- la fourniture des premières données et des deuxièmes données en vue d'une sélection basée sur une entrée utilisateur.

2. Procédé (100) selon la revendication 1, dans lequel les un ou plusieurs réglages (6, 7, 8) comprennent au moins deux éléments parmi une limitation de vitesse de conduite destinée à limiter une vitesse de conduite du véhicule électrique (10), une limitation d'alimentation en puissance destinée à limiter une alimentation en puissance d'un composant d'entraînement électrique (42, 44) du véhicule électrique (10), et une limitation de climatisation destinée à limiter au moins un réglage de climatisation d'un système de climatisation (60) du véhicule électrique (10).

3. Procédé (100) selon la revendication 2, dans lequel l'un des réglages (6, 7, 8) comprend la limitation d'alimentation en puissance, et dans lequel le composant d'entraînement électrique (42, 44) présentant une alimentation en puissance limitée est un moteur électrique parmi au moins deux moteurs électriques du véhicule électrique (10).

4. Procédé (100) selon la revendication 3, dans lequel la limitation d'alimentation en puissance est configurée pour désactiver une alimentation en puissance du moteur électrique.

5. Procédé (100) selon l'une quelconque des revendications précédentes, le procédé (100) comprenant en outre :
- la prédiction d'une première indication prédite de l'état de charge du véhicule électrique (10) à la destination de navigation (3) sur la base des premières données et à l'exclusion d'une recharge à l'arrêt de recharge (4), et
- la prédiction d'une deuxième indication prédite de l'état de charge du véhicule électrique (10) à la destination de navigation (3) sur la base des deuxièmes données,
dans lequel le ou les réglages (6, 7, 8) pour les deuxièmes données sont déterminés de sorte que la deuxième indication prédite de l'état de charge est supérieure à la première indication prédite de l'état de charge.

6. Procédé (100) selon l'une quelconque des revendications précédentes, le procédé (100) comprenant en outre l'obtention d'une sélection du ou des réglages (6, 7, 8) sur la base d'une entrée utilisateur.

7. Procédé (100) selon la revendication 6, dans lequel la sélection obtenue comprend une sélection d'au moins une valeur de réglage dans une plage de valeurs de réglage du ou des réglages (6, 7, 8).

8. Procédé (100) selon la revendication 6 ou 7, dans lequel la sélection basée sur une entrée utilisateur d'un réglage (6, 7, 8) parmi le ou les réglages (6, 7, 8) ajuste au moins un autre réglage (6, 7, 8) parmi le ou les réglages (6, 7, 8) de sorte qu'il est déterminé que la destination de navigation (3) peut être atteinte sans arrêt de recharge sur la base de la sélection basée sur une entrée utilisateur et de l'ajustement des réglages (6, 7, 8).

9. Procédé (100) selon l'une quelconque des revendications précédentes, le procédé (100) comprenant en outre :
- l'obtention d'une sélection des deuxièmes données basée sur une entrée utilisateur, et
- la fourniture de données de commande de véhicule configurées pour commander le véhicule électrique (10) sur la base du ou des réglages (6, 7, 8) des deuxièmes données sélectionnées.

10. Procédé (100) selon l'une quelconque des revendications précédentes, le procédé (100) comprenant en outre :
- l'obtention d'une sélection des deuxièmes données basée sur une entrée utilisateur,
- la fourniture d'une indication mise à jour de l'état de charge du véhicule électrique (10) pendant une navigation du véhicule électrique (10), sur la base des deuxièmes données sélectionnées, et
- la détermination si la destination de navigation (3) peut être atteinte sans arrêt de recharge sur la base au moins de l'indication mise à jour de l'état de charge.

11. Procédé (100) selon la revendication 10, le procédé (100) comprenant en outre le basculement des deuxièmes données sélectionnées vers les premières données ou vers de nouvelles données pour la navigation du véhicule électrique (10) lorsqu'il est déterminé que la destination de navigation (3) ne peut pas être atteinte sans arrêt de recharge sur la base au moins de l'indication mise à jour de l'état de charge.

12. Procédé (100) selon la revendication 10 ou 11, le procédé (100) comprenant en outre la mise à jour du ou des réglages (6, 7, 8) sur la base de l'indication mise à jour de l'état de charge du véhicule électrique (10).

13. Produit programme d'ordinateur (24) comprenant des instructions qui, lorsque le programme est exécuté par un ordinateur, amènent l'ordinateur à mettre en œuvre le procédé (100) selon l'une quelconque des revendications précédentes.

14. Appareil de traitement de données (20) comprenant des moyens pour mettre en œuvre le procédé (100) selon l'une quelconque des revendications 1 à 12.

15. Véhicule électrique (10) comprenant l'appareil de traitement de données (20) selon la revendication 14.
